# EUROPÄISCHE PATENTSCHRIFT

(11) **EP 1 673 918 B1**
(45) Veröffentlichungstag und Bekanntmachung des Hinweises auf die Patenterteilung: **28.03.2007**
(21) Anmeldenummer: 04787203.1
(22) Anmeldetag: 24.09.2004
(51) Int. Cl.: H04L 29/06, H04L 12/18

(54) **Behandlung von Early Media-Daten I**
Handling of early media data I
Traitement de données media précoces I

(30) Priorität: 16.10.2003 DE 10348208
(43) Veröffentlichungstag der Anmeldung: 28.06.2006
(73) Patentinhaber: SIEMENS AKTIENGESELLSCHAFT, 80333 München (DE)
(72) Erfinder: BELLING, Thomas, 81477 München (DE)
(86) Internationale Anmeldenummer: PCT/EP2004/052300
(87) Internationale Veröffentlichungsnummer: WO 2005/039139

(56) Entgegenhaltungen:
- CAMARILLO G ET AL: "Early Media and Ringing Tone Generation in the Session Initiation Protocol" INTERNET DRAFT, [Online] 29. Juni 2003 (2003-06-29), Seiten 1-12, XP002319329 Gefunden im Internet: URL:http://www.watersprings.org/pub/id/dra ft-camarillo-sipping-early-media-02.txt> [gefunden am 2005-02-25] in der Anmeldung erwähnt
- ROSENBERG J: "SIP Early Media" INTERNET DRAFT, [Online] 13. Juli 2001 (2001-07-13), Seiten 1-23, XP002319330 Gefunden im Internet: URL:http://www.watersprings.org/pub/id/dra ft-rosenberg-sip-early-media-00.txt> [gefunden am 2005-02-25]
- QUINN B ET AL: "Session Description Protocol (SDP) Source Filters" INTERNET DRAFT, [Online] 15. Mai 2003 (2003-05-15), Seiten 1-10, XP002319331 Gefunden im Internet: URL:http://www.watersprings.org/pub/id/dra ft-ietf-mmusic-sdp-srcfilter-05.txt> [gefunden am 2005-02-25] in der Anmeldung erwähnt

## Beschreibung

Die Erfindung betrifft Verfahren und Vorrichtungen zum Selektieren von vor einem Abschluss eines Rufaufbaus zwischen einem Rufaufbau-Teilnehmer-Endgerät und mindestens einem Rufziel-Teilnehmer-Endgerät über mindestens ein Telekommunikationsnetz übertragenen "Early Media"- Nutzdaten.

Das sogenannte "Session Initiation Protcol" (SIP) ist ein Signalisierungsprotokoll, das zum sogenannten "Call Control" (=Verbindungssteuerung) zum Beispiel von Telefongesprächen verwendet werden kann. SIP ist von der IETF in RFC 3261 und in einer älteren Version in RFC 2543 standardisiert. SIP nützt zur Beschreibung der vermittelten Kommunikationsverbindung das sogenannte "Session Description Protocol" (SDP), IETF RFC 2327, in einer in IETF RFC 3264 beschriebenen Weise. SIP wird ebenso wie die ausgehandelten Nutzverbindungen üblicherweise über das Internet Protokoll befördert. SIP findet in der beschriebenen Weise beispielsweise im sogenannten "Internet Multimedia Subsystem" (IMS) eines von der 3GPP oder der 3GPP2 standardisierten Mobilfunknetzes Verwendung.

Beim Rufaufbau von dem SIP Endgerät eines Anrufers A zu einem angerufenen Nutzer B kann die SIP Signalisierung von Vermittlungsknoten, sogenannten "Proxies", weitergereicht werden. Dabei ist es den Proxies erlaubt, eine eingehende Nachricht, die den Wunsch des Nutzers A nach einer Verbindung zu B anzeigt (ein sogenannter "INVITE Request") an mehrere andere Proxies oder SIP Endgeräte gleichzeitig oder sequentiell weiterzureichen, zum Beispiel um den Nutzer B zu suchen. Da auch letztgenannte Proxies die Nachricht beim Weiterreichen verzweigen können, kann es zu einer baumartigen Verzweigung der Nachricht kommen. Dieses verzweigte Weiterreichen von Nachrichten wird in SIP als "Forking" (=Verzweigung) bezeichnet.

Wenn die INVITE Nachricht ein Endgerät des Nutzers B erreicht, kann dieses Endgerät mit einer sogenannten "1xx Provisional Response" Nachricht antworten, die zum Beispiel dazu dienen kann, die zur Kommunikationsverbindungen verwendeten Medien (z.B. Sprache, Video) und ihre Codierung auszuhandeln, oder aber dazu anzuzeigen, dass der Nutzer B alarmiert wird (zum Beispiel durch das Klingeln seines SIP-Telefons). Es kann im Fall von Forking vorkommen, dass mehrere Endgeräte solche provisional Responses (=provisorische Antworten) schicken, beispielsweise wenn mehrere SIP-Telefone gleichzeitig klingeln. Zum Abschluss des Aufbaus der Kommunikationsbeziehung zwischen einem Endgerät des Anrufers A und einem Endgerät des Angerufenen B antwortet dieses Endgerät mit einer sogenannten "2xx Final Response" (Final Response = endgültige/abschliessende Antwort), beispielsweise wenn Nutzer B das SIP-Telefon abgehoben hat. Mehrere Endgeräte von B können solche final Responses schicken, beispielsweise wenn mehrere klingelnde SIP-Telefone abgehoben werden. Entsprechend kann es vorkommen, dass das Endgerät von A "Provional Responses" und / oder "Final Responses" von mehreren Endgeräten von B erhält. Jedes Endgerät von B versieht alle Nachrichten, die es als Antworten an A sendet, mit der gleichen eindeutigen Identifizierung. Erreichen das Endgerät von A SIP-Antwortnachrichten mit einer neuen Identifizierung, erfährt das Endgerät von A dadurch, dass es mit einem neuen Endpunkt kommuniziert. In SIP spricht man in diesem Fall davon, dass zwischen dem Endgerät von A und dem antwortenden Endgerät von B ein sogenannter "Dialog" besteht. Bevor A (und/oder ggf. B) für einen Dialog eine "final Response" erhalten hat, spricht man von einem "Early Dialogue", danach von einem "Established Dialogue".

Es kann vorkommen, dass die Endgeräte von A und B schon vor Ende des Aufbaus der Kommunikationsbeziehung Medien (Nutzdaten) austauschen, die als "Early Media" bezeichnet werden. So können beispielweise, wie auch in einem klassischen Telefonnetz, Klingeltöne und Ansagen übertragen werden, vorzugsweise in Richtung von B zu A. Für ein Telefonnetz mit SIP Signalisierung ist eine Unterstützung einer "Early Media" Übertragung besonders wichtig, wenn das Netz mit einem klassischen Telefonnetz verbunden wird.

Falls es beim Aufbau der Kömmunikationsbeziehung von A nach B durch Forking zu mehreren Dialogen im (/mit dem) Endgerät A kommt, kann A auch Medien (Nutzdaten), besonders "Early Media", von verschiedenen Engeräten B, B' erhalten. Das Endgerät von A muss die Medien in geeigneter Weise darstellen. Beispielsweise ist es denkbar, dass verschiedene ankommende Videoströme in getrennten Fenstern auf einem Bildschirm dargestellt werden. Häufig ist jedoch nur die Auswahl eines ankommenden Medienstroms, und das Verwerfen der restlichen Medienströme sinnvoll, beispielsweise weil der Bildschirm in einem mobilen Endgerät zu klein ist, um mehrere Fenster darzustellen, oder weil ein Überlagern verschiedener Klingeltöne oder Ansagen den Inhalt unverständlich machen würde.

Informationen über die entsprechenden SIP Dialoge könnten Kriterien sein, die es erlauben, einen geeigneten Medienstrom (Nutzdaten-Strom) zur Darstellung auszuwählen:
- Wenn durch Erhalt der ersten SIP "final Response" ein "Early Dialogue" zu einem "Established Dialogue" wird, ist es sinnvoll, den entsprechenden Medienstrom auszuwählen.
- Es kann sinnvoll sein, die "Early Media" auszuwählen, die dem jeweils zuletzt etablierten "Early Dialogue" entsprechen. Dies ist besonders dann der Fall, wenn die Proxies "Forking" in einer sequentiellen Weise einsetzen. Wenn ein Endgerät eine negative Antwort schickt, oder aber nach eine gewissen Zeit die Kommunikationsbeziehung mit ihm nicht zustande gekommen ist, beispielweise weil kein Nutzer "abgehoben" hat, reicht ein Proxy den INVITE Request an ein anderes Endgerät weiter. Die IETF SIP WG ist dabei, Methoden zu spezifizieren, die es dem Endgerät A ermöglichen werden, von einem Proxy zu verlangen, nur sequentiell zu suchen (draft-ietf-sip-callerprefs).
- Das Endgerät A kann Dialoge mittels SIP Signalisierung beenden, beispielsweise weil es nur in der Lage ist, eine begrenzte Anzahl von Dialogen zu unterstützen. Die entsprechenden Medien können aber wegen der Laufzeiten von Signalisierung und Medien durchs Netz noch eine gewisse Zeit empfangen werden. Es ist wünschenswert, die Medien während dieser Übergangszeit zu unterdrücken.

Dabei erlauben es die in SIP und SDP enthaltenen Informationen nicht immer eindeutig, einen SIP Dialog mit dem entsprechenden Medienstrom zu korrelieren. Im Besonderen wählt das Endgerät des Anrufers A eine IP Adresse und Port, wie zum Beispiel einen UDP Port (siehe IETF RFC 768), zum Empfangen der Medienströme aus, bevor es den INVITE Request sendet, der diese Angaben enthält. Also werden alle ankommenden Medien an der selben IP Adresse und dem selben Port empfangen. Sie können mittels der Parameter "source IP Adresse" im IP Header und "source Port" im UDP Header der empfangenen Pakete unterschieden werden, also der IP Adresse und dem Port, von dem die Pakete geschickt wurden. Allerdings ist in SIP/SDP gemäß RFC 3264 keine Information über diese source IP Adresse und source Port enthalten, sondern nur über die sogenannte "destination" IP Adresse und den "destination" Port, also die IP Adresse und den Port, zu denen die Pakete geschickt wurden.

Als SIP Forking konzipiert wurde, wurde zunächst die Interaktion mit "Early Media" außer acht gelassen, da "Early Media" in einem SIP Netz nur in besonderen Fällen auftreten, beispielsweise bei Verbindung zu einem klassischen Telefonnetz.

Die Behandlung von "Early Media" (Nutzdaten) im Fall von Forking wird gegenwärtig in der IETF SIPPING Arbeitsgruppe deskutiert. Der Entwurf "draft-camarillo-sipping-early-media", Camarillo et al, "Early media and Ringing tone Generation in the Session Initiation Protocol", 29.06.2003, Version 02, schlägt vor, für Early Media -Nutzdaten eigene Kommunikationsverbindungen mittels SIP auszuhandeln, wobei das Endgerät B bei den Kommunikationsverbindungen für "Early Media" als Anrufer auftritt, wenn es einen Anruf von A für die eigentliche Nutzverbindung erhält und bezüglich dieses Anrufs für die Nutzverbindung mit A zunächst in einen "Early Dialogue" eintritt. Das hat allerdings den Nachteil, das erheblich mehr SIP Nachrichten ausgetauscht werden müssen, was besonders bei der Übertragung über eine Luftschnittstelle mit geringer Bandbreite zur Verzögerung des Callaufbaüs und höheren Ressourcenbedarf führt. Außerdem wäre es möglicherweise erforderlich, getrennte Übertragungsressourcen für "early Media" und die eigentliche Nutzverbindung zu reservieren.

Die IETF MMUSIC Arbeitsgruppe schlägt im "draft-ietf-mmusic-sdp-srcfilter" vor, in SDP einen Parameter einzuführen, der es erlaubt, die Source IP Addresse und den Source UDP Port auszudrücken, von dem aus ein Empfänger Pakete empfangen will. Diese Information ist nützlich, um dazwischenliegende sogenannte "Firewalls" zu konfigurieren. Die Verwendung dieses Parameters in H.248 Signalisierung ist aber bisher nicht beschrieben.

Aufgabe der vorliegenden Erfindung ist es, einem SIP-Endgerät eines Anrufers (Rufaufbau-Teilnehmerendgerät A) zu ermöglichen, möglichst effizient Medienströme (Early-Media-Nutzdaten) auszuwählen (insbesondere für deren Weiterverarbeitung oder Verwerfen). Die Aufgabe wird jeweils durch die Gegenstände der unabhängigen Ansprüche gelöst.

Es wird dem SIP Endgerät des Anrufers A ermöglicht, eine Korrelation zwischen SIP-Dialogen (responses) und Medienströmen (early-media- Nutzdaten) herzustellen, um geeignete Medienströme auszuwählen. Die erfindungemäße Verwendung einer Rufziel-Teilnehmer-Empfangs-Adresse (IP-Adresse/Portnummer), die vom Rufziel (B/B') dem Rufaufbauteilnehmer (A) beispielsweise in einer SIP-Provisional-Response-Nachricht oder SIP-Final-Response-Nachricht mitgeteilt wurde, zur Selektion von vom Rufaufbauteilnehmer (A) empfangenen (vom Rufzielteilnehmer (B) gesendeten) Medienstromdaten (Early-Media-Nutzdaten)- wobei angenommen wird, dass die mittels SIP (oder mittels von SIP transportierten Protokollen wie beispielsweise SDP) signalisierte Rufziel-Teilnehmer-Empfangsadresse und die in den von A empfangenen Paketen der Medienstöme angegebene Sende-Addresse (IP "Source address" - und beispielweise UDP "source port") eines Rufziels (B) gleich sind- ermöglicht eine einfache und effiziente Selektion von Medienstromdaten. Obwohl es theoretisch möglich ist, dass der Teilnehmer B unterschiedliche IP Adressen und / oder unterschiedliche Ports zum Senden und Empfangen von zusammengehörenden Medienströmen verwendet, verwendet B erfahrungsgemäß sehr häufig dazu die selbe IP Adresse und den selben Port. Die erfindungsgemäße Verwendung der Rufziel-Teilnehmer-Empfangsadresse aus der SIP/SDP Signalisierung ist besonders dazu geeignet, Medienströme auszuwählen, die unterdrückt werden sollen. Dadurch wird vermieden, dass A irrtümlich Medienströme unterdrückt, wenn B zum Senden und Empfangen unterschiedliche IP Adressen und/oder Ports verwendet. In diesem Fall ist A zumindest immer in der Lage, den "richtigen" Medienstrom darzustellen, wenn er als einziger empfangen wird. Zum Beispiel kann A nach Erhalt einer SIP final response während einer Übergangszeit mehrere Medienströme empfangen, aber die Medienströme, die den verbleibenden SIP "early dialogues" entsprechen, werden in der Regel nach einiger Zeit enden.

Im Gegensatz zum aktuellen Standardisierungsdokument IETF-SIPPING "draft-camarillo-sipping-early-media", (nämlich für Early Media-Daten eigene Kommunikätionsverbindungen mittels SIP auszuhandeln), ist die erfindungsgemäße Vorgehensweise hinsichtlich über eine Luftschnittstelle zu übertragender SIP-Nachrichten-Anzahl und geringer erforderlicher Änderungen von Endgeräten sehr effizient.

Die zur Selektion berücksichtigten Rufzielteilnehmerempfangsadress-Daten , enthalten sinnvollerweise eine IP Adresse und Portnummer des Rufzielteilnehmers (Endgerät B).

Dass mittels SIP signalisierte Rufzielteilnehmer-Empfangs-Adress-Daten (IP-B, Port-B) eines Rufzielteilnehmers (B) auch Rufzielteilnehmer-Sende-Adress-Daten (IP b, Port b) dieses Rufzielteilnehmers (B) repräsentieren kann insbesondere bedeuten dass sie gleich sind (IP-B = IP b, Port B = Port b) oder bis auf Zusätze gleich sind. Es kann auch vorteilhaft sein, nur die IP Adresse, aber nicht den Port zu betrachten, oder sogar nur einen Ipv6 Adress Prefix zu betrachten. So ist für ein mobiles 3GPP Endgerät (ein sognanntes "User Equipment" (UE) gemäß 3GPP TS 23.060 sichergestellt, dass es nur IP Addressen mit dem selben IPv6 Adress Prefix verwendet.

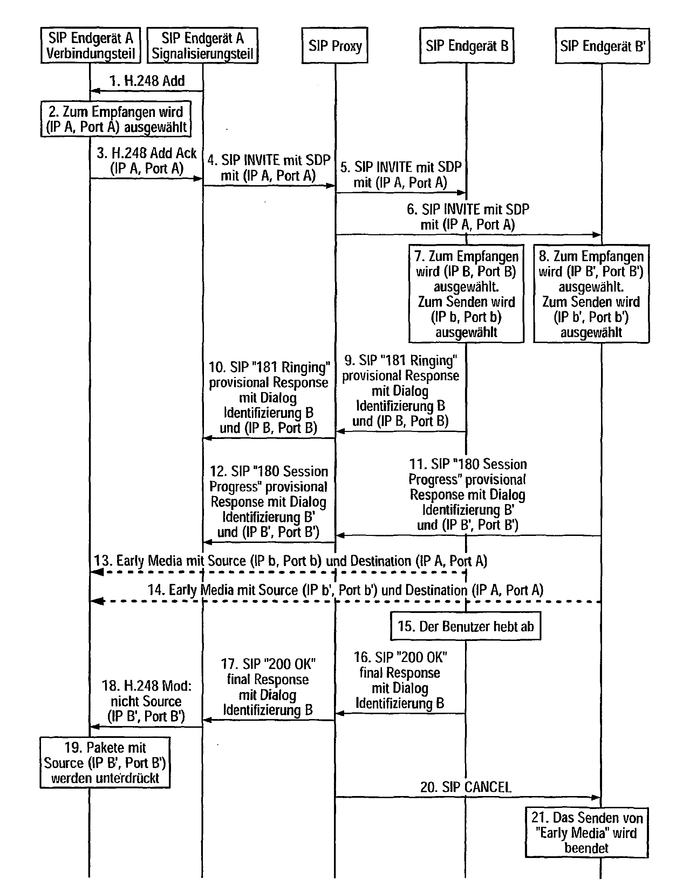

Weitere Merkmale und Vorteile der Erfindung ergeben sich aus der nachfolgenden Beschreibung eines Ausführungsbeispiels anhand der Zeichnung. Dabei zeigt
- Figur 1: schematisch die Signalisierung beim Aufbau von SIP-Verbindungen und Übertragen von Early-Media-Medienstromdaten.

Zellulare Mobilfunknetze (wie GSM, 3G, CDMA2000, TDSCDMA usw.) und Festnetze sowie zugehörige Endgeräte und Signalisierungsverfahren (SIP, SDP), sind dem Fachmann an sich bekannt (siehe beispielsweise Spezifikationen in www.3gpp.org).

Figur 1 zeigt einen ein SIP-Endgerät-A-Verbindungsteil und ein SIP-Endgerät-A-Signalisierungsteil umfassenden Rufaufbauteilnehmer A, welcher über ein (hier nur im Umfang eines zum Verständnis der Erfindung notwendigen SIP-Proxy dargestelltes) Mobilfunknetz mit einem ein SIP Endgerät B umfassenden Rufzielteilnehmer (=B) und einem ein SIP Endgerät B' umfassenden Rufzielteilnehmer (=B') nach einem SIP- Protokoll zum Aufbau einer Nutzdatenverbindung kommuniziert. Beispielsweise kann es sich bei SIP-Endgerät-A-Verbindungsteil um eine sogenannte "IM-MGW", beim SIP-Endgerät-A-Signalisierungsteil um eine sogenannte "MGCF", bei dem SIP-Proxy um eine sogenannte "S-CSCF", und beim SIP Endgerät B und B' um sogenannte "UE" handeln. Zur Vereinfachung wurden einige SIP Nachrichten, wie zum Beispiel "100 Trying", PRACK und 200 OK(PRACK) weggelassen. Im dargestellten Beispiel wird nach einer Nachricht 1 vom SIP-Endgerät-A-Signalisierungsteil an das SIP-Endgerät-A-Verbindungsteil eine Telekommunikationsverbindung (beispielsweise für eine Sprachverbindung oder andere Nutzdatenverbindung) aufzubauen versucht, wobei bis zum Abheben (Schritt 15) des angerufenen Benutzers B am Rufzielteilnehmerendgerät B die Nachrichten 3-7, 9, 10, 13 zwischen dem Rufaufbauteilnehmer A und dem Rufzielteilnehmer B (über das Signalisierungsnetz über den SIP Proxy) ausgetauscht werden. Das SIP-Endgerät-A-Verbindungsteil wählt die vom SIP Endgerät A für künftigen Empfang zu verwendende Adresse (IP Adresse von A (IP-A) und Portnummer von A (Port-A)) aus, übergibt diese im Schritt 3 an das SIP-A-Signalisierungsteil, welches im Schritt 4 eine SIP-INVITE-Nachricht mit Angabe der Endgerät-A-Empfangsadresse (IP A, Port A) an einen SIP Proxy eines Telekommunikationsnetzes (beispielsweise eines zellularen Mobilfunknetzes) sendet, welcher SIP Forking anwendet und im dem Schritt 5 bzw. 6 diese SIP Invite-Nachricht an das Rufzielteilnehmer-B-Endgerät (SIP-Endgerät-B) bzw. Rufzielteilnehmer-B'-Endgerät (SIP-Endgerät-B') überträgt, worauf im Schritt 7 das SIP Endgerät B seine Rufzielteilnehmer-Empfangsadresse (IP B, Port B) und Sendeadresse (IP b, Port b) auswählt, während im Schritt 8 ein das SIP Endgerät B' zum Empfangen seine Rufziel-Teilnehmer-Empfangsadresse (IP B' und Port B') und zum Senden seine Sendeadresse (IP b' und Port b') auswählt. Im Schritt 9 wird die im Rufzielteilnehmer B ausgewählte Rufziel-Teilnehmer-Empfangsadresse (IP-B, Port B) zusammen mit einer eindeutigen Identifizierung des Dialoges B in einer SIP-181-Ringing-Provisional Response-Nachricht an ein SIP Proxy eines Telekommunikationsnetzes übertragen, welches sie im Schritt 10 zusammen mit der Rufziel-Teilnehmer-Empfangsadresse (IP-B, Port B) an den Rufaufbauteilnehmer (A) überträgt. Überdies wird hier im Schritt 11 von dem weiteren SIP Endgerätes B' eine "SIP 180 Session Progress"-"Provisional Response"-Nachricht mit der Rufziel-Teilnehmer-Empfangsadresse (IP-B', Port-B') und der Dialog Identifizierung B' an den SIP Proxy und (im Schritt 12) an das SIP Endgerät A (den Rufbauteilnehmer A) übertragen.

Durch Erhalt der Nachrichten 9 und 11 mit unterschiedlichen Dialog Identifizierungen B und B' weiß das SIP-Endgerät-A-Verbindungsteil, dass es mit zwei Endgeräten B und B' signalisiert, und dass beide Endgeräte möglicherweise schon zu diesem Zeitpunkt Daten (=Early-Media-Daten = Medienstromdaten) an (IP-A, Port-A) senden,wie im Schritt 13 bzw. 14 vom SIP-Endgerät B bzw B' an das Endgerät des Rufaufbauteilnehmers A
Hierbei gibt das SIP-Endgerät B (oder das weitere Anrufziel und SIP-Endgerät B') eine Rufzielteilnehmer-Sendeadresse IPb, Port b (bzw. IP-b', Port-b') an, welche angibt, von woher die Daten stammen, um deren Herkunftsbestimmung beim Rufaufbauteilnehmer A zu ermöglichen. Überdies enthalten die in den Schritten 13 oder 14 übertragenen Early-Media-Daten auch eine Zieladresse des Rufaufbauteilnehmers, die zum IP-Routing benutzt werden. Early Media-Daten können beispielsweise Klingeltöne, Ansagen, etc. enthalten.

Wenn Anrufe (im sogenannten Forking) an mehrere Telekommunikationsnetz-Vermittlungseinrichtungen (Proxies) und/oder SIP-Endgeräte (wie B, B') gleichzeitig oder sequentiell weitergereicht werden und eventuell von adressierten SIP Endgeräten B, B' und/oder Proxies an weitere Endgeräte weitergeleitet werden, können von vielen Endgeräten Provisional Responses und gegebenenfalls Early Media-Medienstromdaten beim Endgerät A des Rufaufbauteilnehmers ankommen, deren Selektion erfindungsgemäß einfach und effizient optimiert wird.

Dies ist möglich, wenn die (in einer Response übertragene) Rufziel-Teilnehmer-Empfangsadresse (IP B, Port B), mit der Rufzielteilnehmer-B-Sendeadresse (IP-b, Port-b) identisch ist und letztere zur Selektion verwendet wird, so dass vom Rufaufbauteilnehmer-Endgerät A empfangene Early-Media-Daten (13,14) mit darin enthaltener Rufzielteilnehmer-Sendeadresse (IP b, Port b) einfach und effizient ohne größere Änderung vorhandener Geräte selektiert werden können (für eine Weiterbearbeitung oder ein Verwerfen). Ein Verwerfen kann beispielsweise erfolgen, wenn nach Übermittlung einer "Final Response 200-OK"-Nachricht in den Schritten 16, 17vom Rufzielteilnehmer-Endgerät-B an das Rufaufbauteilnehmerendgerät (A) die erfolgreiche Beendigung des Rufaufbaus signalisiert wird, so dass darauf ein "Established Dialogue" zwischen dem Endgerät A und dem Endgerät B entsteht, worauf beispielsweise Early-Media-Datenströme, welche nicht dem mit der Nachricht 16/17 etablierten Established Dialogue (die also eine andere Rufteilnehmersendeadresse enthalten)entsprechen, vom Rufaufbauteilnehmer A verworfen/unterdrückt/ignoriert werden können. Erfindungsgemäß erfolgt das Unterdrücken dadurch, dass Medienstromdaten mit Sendeadresse (IP-b', Port-b') ignoriert werden. Hierbei wird angenommen, dass (IP-b', Port-b') und (IP-B', Port-B') identisch sind, was in der Praxis sehr häufig der Fall ist. Das SIP-Endgerät-A-Signalisierungsteil teilt SIP-Endgerät-A-Verbindungsteil in Nachricht 17 mit, dass Medienstromdaten mit Sendeadresse (IP-b', Port-b') ignoriert werden sollen. Hierzu wird in Nachricht 17 beispielsweise ein neuer Parameter eingeführt, der eine oder mehrere Sendeaddressen ausdrückt, deren Pakete ignoriert werden sollen. Dazu kann beispielsweise der von der IETF MMUSIC Arbeitsgruppe in "draft-ietf-mmusic-sdp-srcfilter" vorgeschlagene SDP Parameter dienen, der in SDP innerhalb einer MOD-Nachricht des H.248 Protokolls transportiert wird.
Falls (IP-b', Port-b') und (IP-B', Port-B') tatsächlich identisch sind ,kann damit ein sogenanntes "Clipping" vermieden werden ,also eine nicht vorhandene Nutzverbindung nachdem der Verbindungsaufbau in der Signalisierung aufgrund einer Final Response eines SIP-Endgerätes B nach dem Abheben des Benutzers abgeschlossen ist. Die nicht vorhandene Nutzverbindung kommt durch Weiterverarbeiten von nicht mehr relevanten Early Media-Datenströmen eines SIP-Endgerätes B' mit anderer Sendeadressen IP b', Port b'. zustande. Sonst würde erst nach Empfang einer SIP Cancel-Nachricht (Schritt 20) des SIP Proxies an das weitere SIP-Endgerät (B') (nur) dieses SIP Endgerät B' keine Early Media-Datenströme mehr absenden, und das Clipping könnte in einer Übergangszeit bestehen bleiben, solange Endgerät A noch diese Early-Media Daten empfängt.
Falls (IP-b, Port-b) und (IP-B, Port-B) nicht identisch sind, wird trotzdem der Medienstrom von SIP-Endgeräte B dargestellt. Wenn dagegen SIP Endgerät A nach Erhalt der "Final Response 200-OK'-Nachricht 17 nur noch Nachrichten von (IP-b, Port-b) akzeptieren würde, würden der "richtige" Medienstrom unterdrückt, möglicherweise selbst nachdem keine anderen "Early Media", beispielsweise von Endgerät B', mehr empfangen werden.

## Patentansprüche

1. Verfahren zum Selektieren von aufgrund eines Rufaufbaus (1-12 & 15-19) zwischen einem Rufaufbauteilnehmer (Endgerät A) und mindestens zwei Rufzielteilnehmern (B; B') über mindestens ein Telekommunikationsnetz ("SIP Proxy") von den mindestens zwei Rufzielteilnehmern an den Rufaufbauteilnehmer übertragenen Nutzdaten (13 für B ; 14 für B'),
- indem der Rufaufbauteilnehmer (A) die in einer Antwortnachricht (9, 10 (für B) ; 11, 12 (für B')) mindestens eines der Rufzielteilnehmer (B ; B') enthaltenen Rufzielteilnehmer-Empfangs-Adress-Daten (IP-B, Port-B ; IP-B', Port-B') verwendet, um die von diesem mindestens einen Rufzielteilnehmer (B ; B') zusammen mit Rufzielteilnehmer-Sende-Adress-Daten (IP b, Port-b ; IP-b' Port-b' von B') abgesandten Nutzdaten (13 (/B) ; 14 (/B')) zu selektieren,
- wobei die Rufzielteilnehmer-Empfangs-Adress-Daten (IP-B, Port-B) dieses mindestens einen Rufzielteilnehmers (B) auch Rufzielteilnehmer-Sende-Adress-Daten (IP b, Port b) dieses mindestens einen Rufzielteilnehmers (B) repräsentieren.

2. Verfahren nach Anspruch 1,
**dadurch geknnzeichnet, dass**
die zur Selektion verwendeten Rufzielteilnehmer Empfangs-Adress-Daten eine IP-Adresse (IP-B) und/oder einen Port (Port-B) enthalten.

3. Verfahren nach einem der vorhergehenden Ansprüche,
**dadurch gekennzeichnet, dass**
die Selektion durch Verwerfen der Nutzdaten mit bestimmten Rufzielteilnehmer-Sende-Adress-Daten (IP b, Port-b ; IP-b' Port-b' von B') erfolgt.

4. Verfahren nach einem der vorhergehenden Ansprüche, **dadurch gekennzeichnet, dass** zwischen dem Rufaufbauteilnehmer-SIP-Endgerät-A-Signalisierungsteil und dem Rufaufbauteilnehmer-SIP-Endgerät-A-Verbindungsteil eine oder mehrere Rufzielteilnehmer-Sende-Adress-Daten (IP-b' Port-b' von B') übertragen werden, von denen empfangene Nutzdaten verworfen werden sollen.

5. Verfahren nach einem der vorhergehenden Ansprüche,
**dadurch gekennzeichnet dass**
die Rufzielteilnehmer-Empfangs-Adress-Daten (IP-B, Port-B) der von dem mindestens einen Rufzielteilnehmer (B) an den Rufaufbauteilnehmer (A) als Session Initiation Protocol, SIP, Nachricht, insbesondere SIP-Provisional-Response-Nachricht oder SIP-Final-Response-Nachricht gesandten Antwortnachricht entnommen werden.

6. Verfahren nach Anspruch 5,
**dadurch gekennzeichnet, dass**
beim Selektieren der Nutzdaten Early-Media-Nutzdaten des mindestens einen Rufzielteilnehmers (B, B') nach dem Erhalt der SIP-Final-Response-Nachricht beim Rufaufbauteilnehmer (A) verworfen werden.

7. Verfahren nach einem der vorhergehenden Ansprüche,
**dadurch gekennzeichnet, dass**
beim Selektieren der Nutzdaten des mindestens einen Rufzielteilnehmers nach dem Erhalt einer neuen Early-Media-Nutzdaten und neuen Rufzielteilnehmer-Empfangs-Adress-Daten (IP-B, Port-B) eröffnenden Antwortnachricht des mindestens einen Rufzielteilnehmers (B') diese neuen Early-Media-Nutzdaten verworfen werden.

8. Verfahren nach einem der vorhergehenden Ansprüche,
**dadurch gekennzeichnet, dass**
sobald der Rufaufbauteilnehmer (A) an einen der Rufzielteilnehmer (B') eine den SIP-Dialog beendende Nachricht (SIP Cancel 20) schickt, er (A) von zumindest diesem einen Rufzielteilnehmer (B')
mit Empfangs-Adress-Daten dessen (B') Rufzielteilnehmer (IP-B', Port B') empfangene Early-Media-Nutzdaten (wie 13,14) verwirft.

9. Vorrichtung mit Mitteln zur Durchführung des Verfahrens nach einem der vorhergehenden Ansprüche.

10. Vorrichtung, insbesondere nach Anspruch 9,
**dadurch gekennzeichnet, dass**
der Rufaubauteilnehmer (A) eine Signalisierungsvorrichtung (SIP-Endgerät-A-Signalisierungsteil) und eine Nutzdatenverbindungen behandelnde Vorrichtung (SIP-Endgerät-A-Verbindungsteil) umfasst.

11. Vorrichtung nach einem der Ansprüche 9 bis 10,
**dadurch gekennzeichnet, dass**
das Telekommunikationsnetz ein Mobilfunknetz ist.

## Claims

1. Method for selecting user data (13 for B, 14 for B') transmitted from the at least two called subscribers to the calling subscriber via at least one telecommunication network (SIP proxy) on account of initiating a call (1-12 and 15-19) between a calling subscriber (terminal A) and at least two called subscribers (B; B'),
- in which the calling subscriber (A) uses the called subscriber reception address data (IP B, port B; IP B', port B') contained in a response message (9, 10 (for B); 11, 12 (for B')) of at least one of the called subscriber (B; B') in order to select the user data (13 (/B); 14 (/B')) sent by said at least one called subscriber (B; B') together with called subscriber transmission address data (IP b, port b; IP b', port b' of B'),
- with the called subscriber reception address data (IP B, port B) of this at least one called subscriber (B) also representing called subscriber transmission address data (IP b, port b) of this at least one called subscriber (B).

2. Method according to claim 1,
**characterised in that**
the called subscriber reception address data used for selection contains an IP address (IP B) and/or a port (port B).

3. Method according to one of the preceding claims,
**characterised in that**
selection is effected by rejection of the user data having certain called subscriber transmission address data (IP b, port b; IP b', port b' of B').

4. Method according to one of the preceding claims,
**characterised in that**
one or more called subscriber transmission address data (IP b', port b' of B') are transmitted between the calling subscriber SIP terminal A signalling part and the calling subscriber SIP terminal A connection part, the received user data of which called subscriber transmission address data must be rejected.

5. Method according to one of the preceding claims,
**characterised in that**,
the called subscriber reception address data (IP B, port B) is derived from the at least one response message sent by the called subscriber (B) to the calling subscriber as a session initiation protocol, SIP, message, in particular SIP provision response message or SIP final response message.

6. Method according to claim 5,
**characterised in that**,
in the selection of user data, early media user data of the at least called subscriber (B, B') is rejected upon receipt of the SIP final response message by the calling subscriber (A).

7. Method according to one of the preceding claims,
**characterised in that**,
in the selection of the user data of the at least one called subscriber, upon receipt of a new early media user data and response message of the at least one called subscriber (B') presenting new called subscriber reception address data (IP B, port B), this new early media user data is rejected.

8. Method according to one of the preceding claims,
**characterised in that**,
as soon as the calling subscriber (A) sends a message (SIP CANCEL 20) terminating the SIP dialogue to one of the called subscribers (B'), it (A) rejects early media user data (as 13, 14) received from at least this one called subscriber (B'), having its (B') called subscriber reception address data (IP B', port B').

9. Apparatus with means for carrying out the method according to one of the preceding claims.

10. Apparatus, in particular according to claim 9,
**characterised in that**
the calling subscriber (A) includes a signalling device (SIP terminal A signalling part) and a device for handling user data connections (SIP terminal A connection part).

11. Apparatus as claimed in one of claims 9 to 10,
**characterised in that**
the telecommunication network is a mobile radio network.

## Revendications

1. Procédé pour sélectionner des données utiles (13 pour B; 14 pour B') transmises en raison d'un établissement d'appel (1-12 & 15-19) entre un abonné d'établissement d'appel (terminal A) et au moins deux abonnés de destination d'appel (B; B') via au moins un réseau de télécommunications (SIP Proxy), des au moins deux abonnés de destination d'appel à l'abonné d'établissement d'appel,
- par le fait que l'abonné d'établissement d'appel (A) utilise les données d'adresse de réception d'abonné de destination d'appel (IP-B, Port-B; IP-B', Port-B') contenues dans un message de réponse (9, 10 (pour B); 11, 12 (pour B')) d'au moins l'un des abonnés de destination d'appel (B; B') pour sélectionner les données utiles (13 (/B); 14 (/B')) émises par cet au moins un abonné de destination d'appel (B; B') conjointement avec des données d'adresse d'émission d'abonné de destination d'appel (IP b, Port-b; IP-b', Port-b' de B'),
- les données d'adresse de réception d'abonné de destination d'appel (IP-B, Port-B) de cet au moins un abonné de destination d'appel (B) représentant également des données d'adresse d'émission d'abonné de destination d'appel (IP b, Port b) de cet au moins un abonné de destination d'appel (B).

2. Procédé selon la revendication 1,
**caractérisé en ce que**
les données d'adresse de réception d'abonné de destination d'appel utilisées aux fins de la sélection contiennent une adresse IP (IP-B) et/ou un port (Port-B).

3. Procédé selon l'une des revendications précédentes,
**caractérisé en ce que**
la sélection se fait par rejet des données utiles avec des données d'adresse d'émission d'abonné de destination d'appel déterminées (IP b, Port-b; IP-b', Port-b' de B').

4. Procédé selon l'une des revendications précédentes,
**caractérisé en ce que**
sont transmises, entre la partie de signalisation du terminal SIP A d'abonné d'établissement d'appel et la partie de liaison du terminal SIP A d'abonné d'établissement de liaison, une ou plusieurs données d'adresse d'émission d'abonné de destination d'appel (IP-b', Port-b' de B') dont des données utiles reçues doivent être rejetées.

5. Procédé selon l'une des revendications précédentes,
**caractérisé en ce que**
les données d'adresse de réception d'abonné de destination d'appel (IP-B, Port-B) sont tirées du message de réponse envoyé de l'au moins un abonné de destination d'appel (B) à l'abonné d'établissement d'appel (A) en tant que message SIP de protocole d'initiation de session, en particulier en tant que message «SIP Provisional Response» ou message «SIP Final Response».

6. Procédé selon la revendication 5,
**caractérisé en ce que**,
à la sélection des données utiles, des données utiles «Early Media» de l'au moins un abonné de destination d'appel (B, B') sont rejetées après la réception du message «SIP Final Response» au niveau de l'abonné d'établissement d'appel (A).

7. Procédé selon l'une des revendications précédentes,
**caractérisé en ce que**,
à la sélection des données utiles de l'au moins un abonné de destination d'appel, après la réception d'un message de réponse de l'au moins un abonné de destination d'appel (B') annonçant de nouvelles données utiles «Early Media» et de nouvelles données d'adresse de réception d'abonné de destination d'appel (IP-B, Port-B), ces nouvelles données utiles «Early Media» sont rejetées.

8. Procédé selon l'une des revendications précédentes,
**caractérisé en ce que**,
dès que l'abonné d'établissement d'appel (A) envoie un message terminant le dialogue SIP (SIP Cancel 20) à l'un des abonnés de destination d'appel (B'), il (A) rejette des données utiles «Early Media» (telles que 13, 14) reçues d'au moins cet un abonné de destination d'appel (B') avec les données d'adresse de réception d'abonné de destination d'appel de celui-ci (B').

9. Dispositif avec des moyens permettant la mise en oeuvre du procédé selon l'une des revendications précédentes.

10. Dispositif, en particulier selon la revendication 9,
**caractérisé en ce que**
l'abonné d'établissement d'appel (A) comprend un dispositif de signalisation (partie de signalisation du terminal SIP A) et un dispositif traitant des liaisons de données utiles (partie de liaison du terminal SIP A).

11. Dispositif selon l'une des revendications 9 à 10,
**caractérisé en ce que**
le réseau de télécommunications est un réseau radio mobile.
